# EUROPÄISCHE PATENTSCHRIFT

(11) **EP 1 797 458 B1**
(45) Veröffentlichungstag und Bekanntmachung des Hinweises auf die Patenterteilung: **14.06.2017**
(21) Anmeldenummer: 05776029.0
(22) Anmeldetag: 19.08.2005
(51) Int. Cl.: G01S 17/93, B62D 15/02, B60Q 9/00, B60K 31/00, B60W 10/20

(54) **VERFAHREN UND VORRICHTUNG ZUR FAHRERUNTERSTÜTZUNG**
METHOD AND DEVICE FOR ASSISTING A DRIVER
PROCÉDÉ ET DISPOSITIF D'ASSISTANCE AU CONDUCTEUR

(30) Priorität: 01.10.2004 DE 102004048012
(43) Veröffentlichungstag der Anmeldung: 20.06.2007
(73) Patentinhaber: ROBERT BOSCH GMBH, 70442 Stuttgart (DE)
(72) Erfinder: SCHMITZ, Carsten, 71229 Leonberg (DE)
(86) Internationale Anmeldenummer: PCT/EP2005/054106
(87) Internationale Veröffentlichungsnummer: WO 2006/037691

(56) Entgegenhaltungen:
- EP-A- 1 371 948
- EP-A- 1 422 586
- EP-A- 1 426 906
- EP-A- 1 531 112
- DE-A1- 10 205 225
- DE-A1- 10 311 518
- DE-A1- 10 342 528
- DE-A1- 19 937 489
- US-A- 6 107 939

## Beschreibung

Die Erfindung betrifft ein Verfahren und eine Vorrichtung zur Fahrerunterstützung.

### Stand der Technik

Derartige Verfahren bzw. Vorrichtungen, sogenannte Fahrerassistenzsysteme, sind in .verschiedenen Ausprägungen beschrieben. Ein Beispiel für ein solches Fahrerassistenzsystem ist ein Spurverlassenswarner (Lane-Departure-Warning), welcher den Fahrer bei Verlassen der Fahrspur oder bei drohendem Verlassen warnt. Ein Beispiel für einen solchen Spurverlassenswarner ist in der EP 1 074 430A1 beschrieben. Dabei wird überprüft, ob das Fahrzeug die beispielsweise durch Fahrbahnrandmarkierungen begrenzte Fahrspur verlässt bzw. zu verlassen droht. Eine deutliche Funktiönsverbesserung eines solchen Fahrerassistenzsystems würde erreicht, wenn zwischen einem beabsichtigten und einem unbeabsichtigten Spurwechsel, also beispielsweise zwischen einem Spurwechsel, zu Überholzwecken und einem Spurwechsel aufgrund von Unaufmerksamkeit des Fahrers, unterschieden werden könnte.

Die DE 103 42 528 A1 beschäftigt sich mit der Klassifikation von Spurwechselabsichten, um dadurch Fehlalarme bei einem Spurverlassenswarnungssystem zu reduzieren. Der Fahrer wird nur dann gewarnt, wenn der Spurwechsel nicht beabsichtigt ist, insbesondere nach einer Gefahrensituation. Es werden auch Weite aus der Vergangenheit betrachtet, um ein neuronales Netz anzulernen.

Auch die EP 1 426 906 A1 beschäftigt sich mit der Vermeidung von Fehlwarnungen bei Systemen von Fahrspurerkennung. Es werden verschiedene Szenarien diskutiert, bei denen eine Fehlwarnung auftreten kann, gegebenenfalls mit Strategien zur Erkennung oder dem richtigen Verhalten darauf.

Die EP 1 422 586 A2 zeigt ein Verfahren zur Überwachung eines Fahrzeugführers unter Verwendung einer Fahrspurerkennung. Dabei kann eine Warnung an den Fahrzeugführer ausgegeben werden, wenn die Fahrspurerkennung eine kritische Fahrsituation detektiert. In Abhängigkeit von einer Bestimmung einer Aktivität des Fahrzeugführers kann die Warnung unterdrückt oder um einen vorgegebenen Zeitintervall ausgesetzt werden.

### Vorteile der Erfindung

Durch die Berücksichtigung der Art wenigstens eines zurückliegenden Spurwechsels, insbesondere ob es sich um einen beabsichtigten oder unbeabsichtigten Spurwechsel handelte, bei der Unterscheidung, ob ein vom Fahrer beabsichtigter Spurwechsel oder ein unbeabsichtigter Spurwechsel vorliegt, wird die Funktion eines Fahrerassistenzsystems erheblich verbessert. Insbesondere wird dadurch eine Reduzierung von Fehlalarmen des Spurverlassenswamers erreichen.

In besonders vorteilhafter Weise wird somit eine Steigerung der Akzeptanz und Transparenz der Spurwechselabsichtserkennung bei einem Spurverlassenswarner erreicht.

Die beschriebene Vorgehensweise wird auch in anderen Fahrerassistenzsystemen, die eine Spurwechselabsichterkennung auswerten, beispielsweise bei einem adaptiven Fahrgeschwindigkeitsregler, bei Tote-Winkel-Detektions-Systemen oder bei Spurwechselassistenzsystemen von Bedeutung sein.

Durch die nachfolgend dargelegte Vorgehensweise wird eine sichere Unterscheidung zwischen einem beabsichtigten und einem unbeabsichtigten Spurwechsel auch in komplexen Situationen, beispielsweise wenn ein Fahrzeug nach einem durchgeführten Überholvorgang wieder auf die rechte Fahrspur zurückschert, erreicht.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert.

Figur 1 zeigt dabei ein Übersichtsbild für eine Verarbeitungseinheit, in welcher die Spurwechselerkennung durchgeführt wird. Diese Verarbeitungseinheit ist am Beispiel eines Spurverlassenswarners dargestellt.

In Figur 2 ist ein Flussdiagramm dargestellt, welches die grundsätzliche Vorgehensweise zur Spurwechselklassifizierung im Zusammenhang mit der Spurverlassenswarnung darstellt.

Figur 3 schließlich zeigt ein Ablaufdiagramm für ein bevorzugtes Ausführungsbeispiel einer Spurwechselabsichtserkennung unter Berücksichtigung von wenigstens einem zurückliegenden Spurwechsel.

### Beschreibung von Ausführungsbeispielen

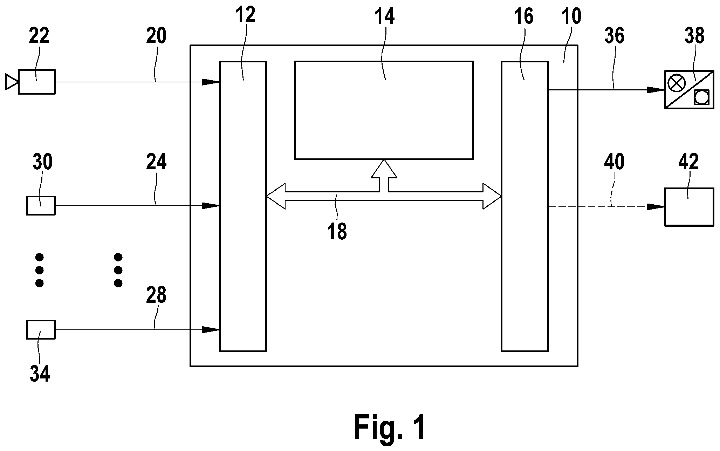

Figur 1 zeigt eine Vorrichtung, welche Teil eines Systems zur Fahrerunterstützung ist (z.B. zur Warnung und/oder zum Ansteuern eines Stellelements zur Querführung des Fahrzeugs bei Verlassen oder drohendem Verlassen der Fahrspur). Dargestellt ist eine Steuer- bzw. Auswerteeinheit 10, welche wenigstens eine Eingangsschaltung 12, einen Mikrocomputer 14 und eine Ausgangsschaltung 16 aufweist. Diese Elemente sind mit einem Bussystem zum gegenseitigen Datenaustausch miteinander verbunden. Der Eingangsschaltung 12 werden Eingangsleitungen von verschiedenen Messeinrichtungen zugeführt, über die Messsignale bzw. Messinformationen übermittelt werden. Eine erste Eingangsleitung 20 verbindet die Eingangsschaltung 12 mit einem Bildsensorsystem 22, welches die Szene vor dem Fahrzeug aufnimmt. Entsprechende Bilddaten werden über die Eingangsleitung 20 übermittelt. Ferner sind Eingangsleitungen 24 bis 26 vorgesehen, welche die Eingangsschaltung 12 mit Messeinrichtungen 30 bis 34 verbinden. Bei diesen Messeinrichtungen handelt es sich beispielsweise um Messeinrichtungen zur Messung der Fahrzeuggeschwindigkeit, zur Erfassung des Lenkwinkels und/oder der Gierrate, zur Erfassung einer Größe, welche einen Beschleunigungswunsch des Fahrers repräsentiert, beispielsweise das Ausmaß der Fahrpedalbetätigung durch den Fahrer, zur Erfassung der Geschwindigkeit und/oder der Beschleunigung des Fahrzeugs sowie zur Erfassung weiterer Betriebsgrößen des Fahrzeugs, welche im Zusammenhang mit der nachfolgend beschriebenen Vorgehensweise Bedeutung haben. Über die Ausgangsschaltung 16 und Ausgangsleitung 36 wird wenigstens eine Warneinrichtung 38 angesteuert, beispielsweise eine Warnlampe und/oder ein Lautsprecher für eine akustische Warnung und/oder für eine Sprachausgabe und/oder ein Display für die Anzeige eines Bildes und/oder ein Stellelement für eine haptische Anzeige, mit deren Hilfe der Fahrer über das (drohende) Verlassen der Fahrspur informiert wird. Darüber hinaus oder alternativ dazu ist in einigen Ausführungsbeispielen vorgesehen, über die Ausgangsschaltung 16 und eine Ausgangsleitung 40 ein Stellsystem zu 41 anzusteuern, welches automatisch beispielsweise durch Eingriff in die Lenkung des Fahrzeugs das Fahrzeug wieder in die Spur zurückführt (Querführung) und so das Verlassen der Fahrspur verhindert.

Mittels Methoden der Bildanalyse wird im Ausführungsbeispiel des Spurverlassenswarners auf der Basis der vom Bildsensorsystem zugeführten Bilddaten der Szene vor dem Fahrzeug Spurdaten ermittelt, die den Verlauf und die Größe der Fahrspur repräsentieren. So werden z.B. die Fahrspurrandmarkierungen (linker und/oder rechter Fahrspurrand) erfasst und der Verlauf des jeweiligen Fahrspurrandes beispielsweise als Polynom (Potenzfunktion dritter Ordnung) angenähert. Ferner wird der Verlauf die Fahrspur des Fahrzeugs, beispielsweise für das rechte und/oder linke Rad, aus Fahrzeuggeometriegrößen, den aktuellen und ggf. vergangenen Größen der Fahrzeuggeschwindigkeit, dem Lenkwinkel oder der Gierrate, etc. berechnet und ebenfalls als Polynom dargestellt. Aus den genannten Daten werden weitere Spurdaten berechnet, beispielsweise der laterale Abstand zwischen Spurmarkierung und Spur des Fahrzeugs (rechte Seite zum rechten Rand, linke Seite zum linken Rand), die Krümmung der Fahrspur, und/oder der Winkel zwischen Fahrspur und Spurmarkierung (rechte Fahrspur zum rechten Rand, linke Fahrspur zum linken Rand) anhand von Tangentenvergleichen. Daraus wird in einer Ausführung ggf. auch die erwartete Zeit bis zum Kreuzen der Linien (time to line corssing) errechnet. Die Warnung erfolgt im bevorzugtem Ausführungsbeispiel bei Überschreiten eines vorgegebenen lateralen Abstands oder bei Unterschreiten eines vorgegebenen Zeitwertes.

Wesentlich bei einer solchen Funktion ist, dass der Fahrer nur dann gewarnt wird, wenn er ein Überfahren der Spurmarkierung tatsächlich nicht beabsichtigt.

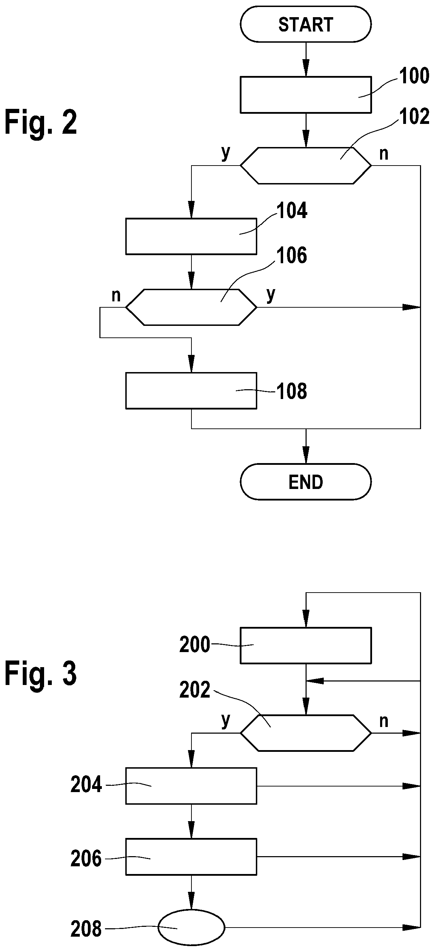

Figur 2 zeigt ein Flussdiagramm, bei welchem der skizzierte Spurverlassenswarner durch einen Klassifikator ergänzt ist, der auf der Basis von Betriebsgrößen des Fahrzeugs die Spurwechselsituation bewertet und in "unbeabsichtigter Spurwechsel" oder "beabsichtigter Spurwechsel" klassifiziert. Das Flussdiagramm der Figur 2 skizziert dabei ein entsprechendes Programm, welches im Mikrocomputer der in Figur 1 skizzierten Vorrichtung abläuft. Im ersten Schritt 100 werden (einmal für die eine Fahrzeugseite, in einem anderen Durchlauf für die andere Fahrzeugseite) die oben skizzierten Fahrspurdaten eingelesen, d. h. der Verlauf der Fahrspurrandmarkierung, der Verlauf der Istfahrspur des Fahrzeugs, eine Größe für den lateralen Abstand zwischen Fahrzeug und Fahrspurrand, eine Größe für den Winkel zwischen Fahrzeugspur und Fahrspurrand, bzw. die weiteren oben genanten Betriebsgrößen, etc. Im darauffolgenden Schritt 102 wird überprüft, ob ein Verlassen der Fahrspur vorliegt bzw. ob ein solches Verlassen droht. Ist dies nicht der Fall, wird Schritt 100 wiederholt. Wird ein Verlassen bzw. ein drohendes Verlassen erkannt, so wird in Schritt 104 durch den Klassifikator anhand von Betriebsgrößen ermittelt, ob der Spurwechsel beabsichtigt oder unbeabsichtigt ist. Daraufhin wird in Schritt 106 überprüft, ob das Verlassen der Fahrspur beabsichtigt ist oder nicht. Ist es beabsichtigt, unterbleibt die Warnung bzw. die Querführungsreaktion und das Programm wird mit Schritt 100 wiederholt. Ist im anderen Fall jedoch erkannt worden, dass das Verlassen der Fahrspur unbeabsichtigt ist, so wird gemäß Schritt 108 optisch, akustisch und/oder haptisch gewarnt bzw. eine Spurhaltereaktion, beispielsweise das Ansteuern eine Stellelements zur Beeinflussung der Lenkung, ausgeführt.

Es sind verschiedene Ausführung zur Klassifizierung bekannt. Die grundsätzliche Vorgehensweise zur Klassifikation baut auf der Auswertung von wenigstens zwei Betriebsgrö-ßen des Fahrzeugs auf, anhand derer auf das Verhalten des Fahrers geschlossen werden kann. Betriebsgrößen, die dafür geeignet sind, sind beispielsweise der Lenkwinkel (alternativ die Gierrate), die Geschwindigkeit des Fahrzeugs bzw. die Beschleunigung oder Verzögerung, der laterale Offset zwischen Fahrzeugspur und Fahrspurrand, insbesondere seine Veränderung, und/oder der Winkel der Fahrzeugspur zum Fahrbahnrand. Dabei wird in Bezug auf den Lenkwinkel das Lenkverhalten abgeprüft, welches bei Spurwechselabsicht deutlich erkennbar ist. Ein Lenkwinkel größer als ein vorbestimmter Wert, insbesondere eine entsprechend zeitliche Änderung des Lenkwinkels deutet auf Spurwechselabsicht hin. Während einer Kurvenfahrt ist hierbei die ermittelte Fahrbahnkrümmung zu berücksichtigen. Ferner liegt bei Spurwechselabsicht insbesondere nach links meistens eine Beschleunigung des Fahrzeugs vor, so dass bei einer Beschleunigung des Fahrzeugs bzw. einem Beschleunigungswunsch des Fahrers größer als ein vorgegebener Schwellenwert von einem beabsichtigten Spurwechsel auszugehen ist. Eine weitere geeignete Größe ist der laterale Abstand des Fahrzeugs zur Spurmarkierung, insbesondere dessen zeitliche Änderung. Diese stellt ein Maß für die Stärke, mit der sich ein Fahrzeug der Fahrspurrandmarkierung nähert, dar. Dieses Maß ist bei gewollten Spurwechseln erheblich größer als bei ungewollten. Entsprechendes gilt für den Winkel zur Fahrspurmarkierung, der bei gewollten Spurwechseln deutlich größer ist als bei ungewollten.

Zusammenfassend ist festzustellen, dass eine Klassifikation des Spurwechselvorgangs in ungewollte und gewollte Spurwechsel anhand von Betriebsgrößen des Fahrzeugs erfolgt, insbesondere wenn der Lenkwinkel einen Schwellenwert überschreitet und/oder der Beschleunigungswunsch des Fahrers einen Schwellenwert überschreitet und/oder der zeitliche Verlauf des lateralen Abstands zur Randmarkierung einen Schwellenwert überschreitet und/oder der Winkel zur Randmarkierung einen Schwellenwert überschreitet. Diese Kriterien werden gewichtet zur Klassifizierung des Spurwechselvorgangs in beabsichtigte und unbeabsichtigte Spurwechsel ausgenutzt, wobei im Allgemeinen ein beabsichtigter Spurwechsel bei Vorliegen wenigstens einer der beschriebenen Situationen erkannt wird, ein unbeabsichtigter bei Nichtvorliegen.

Es hat sich gezeigt, dass ein Spurwechsel nach links und ein Spurwechsel nach rechts unterschiedlich zu bewerten sind, da der Spurwechsel nach links meist mit einem Überholvorgang verbunden ist und das Fahrzeug beschleunigt wird. Auch ist in diesem Fall bei gewolltem Spurwechsel das Lenkverhalten deutlich verstärkt und der Winkel zur Spurmarkierung sehr groß.

Während sich in der Regel sehr gute Erkennungsraten bei Spurwechseln nach links ergeben, sind Spurwechsel nach rechts wesentlich schwieriger dahingehend zu untersuchen, ob der Spurwechsel absichtlich oder unabsichtlich erfolgt. Grund ist ein das oben skizzierte unterschiedliche Verhalten der Fahrzeugführer bei Spurwechsel nach links und recht. Bei einem Überholvorgang wird das Fahrzeug im Allgemeinen vor dem Verlassen der Fahrspur nach links beschleunigt, zusammen mit einem gut erkennbaren Lenkverhalten. Schert des Fahrzeug jedoch nach dem durchgeführten Überholmanöver wieder auf die rechte Fahrspur zurück, liegt meist eine negative Beschleunigung vor und ein klares Lenkverhalten ist oft nicht zu erkennen. Daher lässt sich die Klassifikation der Spurwechsel dadurch verbessern, dass die Art der zurückliegenden Spurwechsel (ob beabsichtigt oder nicht) berücksichtigt wird, insbesondere des letzten zurückliegenden, und auf der Basis dieser zusätzlichen Information auf die Wahrscheinlichkeit der zukünftigen Spurwechselabsicht geschlossen wird. In dem oben geschilderten Szenario kann somit von einem gewollten Spurwechsel ausgegangen werden, wenn zuvor ein klarer Spurwechsel- bzw. Überholwunsch erkannt worden ist. Im Ausführungsbeispiel eines Spurverlassenswarners kann in einer solchen Situation daher die Warnung unterdrückt werden. Liegen vergangene Spurwechsel zu weit zurück, lässt sich die beschriebene Schlussfolgerung nicht ohne weiteres ziehen und es muss ermittelt werden, beispielsweise im Rahmen der oben genannten Vorgehensweise, ob ein beabsichtigter oder ein unbeabsichtigter Spurwechsel vorliegt. Entsprechend wird im Anwendungsbeispiel des Spurverlassenswarner eine Warnung erfolgen oder nicht.

Figur 3 zeigt ein Ablaufdiagramm, welches eine Realisierungsmöglichkeit der oben dargestellten Vorgehensweise als Rechnerprogramm skizziert. Das Ablaufdiagramm zeigt dabei eine Vorgehensweise beim einem Spurverlassenswarner. Das skizzierte Programm wird in vorgegebenen Zeitintervallen bei aktivem Spurverlassenswarner durchlaufen.

Im ersten Schritt 200 wird ausgehend von der verwendeten Mono-Video-Kamera und der von ihr erzeugten Bilder beispielsweise die oben erwähnten Fahrspurinformationen (auch den Kurs des eigenen Fahrzeugs) übermittelt. Ferner werden Fahrzeuginformation übermittelt, beispielsweise über einen CAN-Bus. Diese umfassen beispielsweise die Fahrgeschwindigkeit des Fahrzeugs, die Beschleunigung des Fahrzeugs, die Gierrate, etc, die von anderen Systemen über den CAN-Bus übermittelt werden. Auf der Basis dieser Informationen, insbesondere der Fahrspurinformationen, wird Schritt 202 überprüft, ob ein Spurwechsel vorliegt oder nicht. Im bevorzugten Ausführungsbeispiel wird ein Spurwechsel wie oben erwähnt auf der Basis des lateralen Abstands oder des Zeitwertes /time to line crossing) erkannt. Hat diese Untersuchung ergeben, dass kein Spurwechsel zu erwarten ist bzw. vorliegt, wird das Programm mit Schritt 200 wieder gestartet. Liegt ein Spurwechsel vor, so wird im Schritt 204 anhand der Fahrzeuginformation eine Situationserkennung durchgeführt dahingehend, ob die aktuelle Fahrsituation eine Spurwechselabsicht des Fahrers impliziert oder nicht, Dies ist beispielsweise dann der Fall, wenn eine Überholabsicht des Fahrers zu erkennen ist. Dies ist dann der Fall, wenn eine Beschleunigung des Fahrzeugs erkannt wird bei gleichzeitiger Lenkung des Fahrzeugs über einen bestimmten Wert hinaus. Ein weiteres Erkennungsmerkmal kann in einer Ausführung das Setzen des Blinkers durch den Fahrer sein.

Eine weitere Situation, die Fahrerabsicht impliziert und die in Schritt 204 untersucht wird, ist die Berücksichtigung der Art wenigstens eines zurückliegenden Spurwechsels. Zurückliegende Spurwechsel, insbesondere die Information ob es sich um beabsichtigte und nichtbeabsichtigte Spurwechsel handelt bzw. ob das Warnsignal unterdrückt beim Spurwechsel unterdrückt bzw. nicht erzeugt wurde, werden gespeichert. Ist ein zurückliegender Spurwechsel aufgrund von Fahrerabsicht als beabsichtigter Spurwechsel erkannt worden, so wird davon ausgegangen, dass der darauffolgende Spurwechsel ebenfalls absichtlich ist. Dies insbesondere dann, wenn der Spurwechsel in die entgegengesetze Richtung (nach linkem Spurwechseln anschließendem rechten Spurwechsel) erfolgt. Die Absichterkennung kann dabei aufgrund der Fahrsituation (wie oben geschildert) oder aufgrund von anderen Kriterien (siehe unten) erfolgt sein. In einer Ausführung werden nur Spurwechsel berücksichtigt, die nicht länger als eine vorgegebenen Zeitperiode zurückliegen. Eine bevorzugte Option zur Realisierung ist, dass ermittelt wird ob das Ausgangssignal (Warnsignal) bei dem wenigstens einen zurückliegenden Spurwechsel unterdrückt oder reduziert war, d.h. somit ein beabsichtigter Spurwechsel vorlag. Ein weiteres Kriterium, welches in einer Ausführung abgeprüft wird ist dass der Spurwechsel in die entgegensetzte Richtung als der zurückliegende Spurwechsel erfolgt und auf die Warnung nur dann verzichtet wird, wenn zusätzlich zu den obigen Kriterien der Fall ist.

Ergebnis der Situationserkennung in Schritt 204 ist eine Entscheidung, ob die Situation einen Fahrerabsicht impliziert, d.h. der Spurwechsel aufgrund der Fahrerabsicht stattfmdet oder nicht. Im erstgenannten Fall wird keine Warnung ausgegeben und das Programm mit Schritt 200 wiederholt, im letztgenannten wird zu Schritt 206 gegangen. Hat also Schritt 204 kein eindeutiges Ergebnis ergeben, d.h. kann aufgrund der Fahrsituation nicht auf eine Absicht des Spurwechsels geschlossen werden, so wird in Schritt 206 eine Spurwechselabsichtserkennung beispielsweise nach Maßgabe der vorstehend beschriebenen Vorgehensweise vorgenommen. Wird eine Spurwechselabsicht erkannt, so wird die Warnung der Spurverlassenswarnung unterdrückt oder zumindest reduziert (unauffälliger) und das Programm mit Schritt 200 wiederholt. Wird im Schritt 206 keine Spurwechselabsicht durch den Klassifikator erkannt, so wird von einer erkannten Unaufmerksamkeit, beispielsweise Sekundenschlaf, ausgegangen und der Spurverlassenswarner warnt gemäß Schritt 208 akustisch, optisch und/oder haptisch.

## Patentansprüche

1. Verfahren zur Fahrerunterstützung, wobei ein Ausgangssignal erzeugt wird, wenn ein Spurwechselvorgang des Fahrzeugs erkannt wird, wobei das Ausgangssignal abhängig von der Fahrsituation beim Spurwechsel unterdrückt oder nicht erzeugt oder reduziert wird, wobei in einem Schritt (202) auf Basis einer übermittelten Fahrspurinformation und einer übermittelten Fahrzeuginformation überprüft wird, ob ein Spurwechsel vorliegt oder nicht, und wobei, wenn ein Spurwechsel vorliegt, in einem Schritt (204) anhand der Fahrzeuginformation, welche Fahrgeschwindigkeit, Beschleunigung, Lenkwinkel, und/oder Gierrate umfasst, eine Situationserkennung dahin gehend durchgeführt wird, ob die aktuelle Fahrsituation eine Spurwechselabsicht des Fahrers impliziert oder nicht, **dadurch gekennzeichnet, dass**
eine weitere Situation, die Fahrerabsicht impliziert, untersucht wird,
wobei davon ausgegangen wird, dass der Spurwechsel absichtlich ist, wenn ermittelt wird, dass das Ausgangssignal bei wenigstens einem zurückliegenden Spurwechsel unterdrückt oder reduziert war, und dass das Ausgangssignal unterdrückt oder zumindest reduziert wird, wenn der Spurwechsel aufgrund der Fahrerabsicht stattfindet.

2. Verfahren nach einem der vorhergehenden Ansprüche, **dadurch gekennzeichnet, dass** das Ausgangssignal unterdrückt oder reduziert wird, wenn der Spurwechsel in die entgegensetzte Richtung erfolgt als der zurückliegende Spurwechsel.

3. Verfahren nach einem der vorhergehenden Ansprüche, **dadurch gekennzeichnet, dass** mittels eines Klassifikators zwischen beabsichtigtem und unbeabsichtigtem Spurwechsel unterschieden wird und das Ausgangssignal abhängig von diesem Ergebnis erzeugt wird.

4. Verfahren nach einem der vorhergehenden Ansprüche, **dadurch gekennzeichnet, dass** anhand von Fahrzeuginformationen wie beispielsweise Beschleunigung, Lenkwinkel eine Analyse der Fahrsituation vorgenommen wird und aus der ermittelten Situation das Vorliegen einer Fahrerabsicht beim Spurwechsel abgeleitet wird.

5. Verfahren nach einem der vorhergehenden Ansprüche, **dadurch gekennzeichnet, dass** eine Klassifizierung der Spurwechselabsicht stattfindet, wenn die Fahrsituation nicht eindeutig auf eine Fahrerabsicht schließen lässt.

6. Verfahren nach einem der vorhergehenden Ansprüche, **dadurch gekennzeichnet, dass** das Ausgangssignal ein Warnsignal eines Spurverlassenswamers ist.

7. Vorrichtung zur Fahrerunterstützung, mit wenigstens einer Auswerteeinheit zur Erzeugung eines Ausgangssignals, wobei die Auswerteeinheit derart konfiguriert ist, dass bei einem Spurwechsel das Ausgangssignal unterdrückt, nicht erzeugt oder reduziert wird abhängig von der Fahrsituation beim Spurwechsel, wobei die Auswerteeinheit konfiguriert ist, um auf Basis einer übermittelten Fahrspurinformation und einer übermittelten Fahrzeuginformation zu überprüfen, ob ein Spurwechsel vorliegt oder nicht, wobei, wenn ein Spurwechsel vorliegt, anhand der Fahrzeuginformation, welche Fahrgeschwindigkeit, Beschleunigung, Lenkwinkel und/oder Gierrate umfasst, eine Situationserkennung dahin gehend durchgeführt wird, ob die aktuelle Fahrsituation eine Spurwechselabsicht des Fahrers impliziert oder nicht,
**dadurch gekennzeichnet, dass**
eine weitere Situation, die Fahrerabsicht impliziert, untersucht wird, wobei davon ausgegangen wird, dass der Spurwechsel absichtlich ist, wenn ermittelt wird, dass das Ausgangssignal bei wenigstens einem zurückliegenden Spurwechsel unterdrückt oder reduziert war, und das Ausgangssignal unterdrückt oder zumindest reduziert wird, wenn der Spurwechsel aufgrund der Fahrerabsicht stattfindet.

## Claims

1. Method for assisting a driver, wherein an output signal is generated if a lane changing process of the vehicle is detected, wherein the output signal is suppressed, or not generated or reduced depending on the driving situation at the lane change, wherein in a step (202) it is checked, on the basis of transmitted lane information and transmitted vehicle information, whether a lane change is occurring or not, and wherein if a lane change is occurring a situation-detection process is carried out in a step (204) on the basis of the vehicle information which comprises the vehicle velocity, acceleration, steering angle and/or yaw rate, to determine whether the current driving situation implies a driver's intention to change lane or not, **characterized in that**
a further situation which implies the driver's intention is examined, wherein it is assumed that the lane change is intentional if it is determined that the output signal was suppressed or reduced at at least one preceding lane change, and **in that** the output signal is suppressed or at least reduced if the lane change takes place on the basis of the driver's intention.

2. Method according to one of the preceding claims, **characterized in that** the output signal is suppressed or reduced if the lane change takes place in the opposite direction than the preceding lane change.

3. Method according to one of the preceding claims, **characterized in that** a differential is made between intentional and unintentional lane changes by means of a classifier, and the output signal is generated as a function of this result.

4. Method according to one of the preceding claims, **characterized in that** an analysis of the driving situation is performed on the basis of the vehicle information such as, for example, acceleration, steering angle, and the presence of a driver's intention of the lane change is derived from the determined situation.

5. Method according to one of the preceding claims, **characterized in that** the intention to change lane is classified if the driving situation does not permit a driver's intention to be inferred unambiguously.

6. Method according to one of the preceding claims, **characterized in that** the output signal is a warning signal of a lane departure warning device.

7. Device for assisting a driver, having at least one evaluation unit for generating an output signal, wherein the evaluation unit is configured in such a way that at a lane change the output signal is suppressed, not generated or reduced depending on the driving situation at the lane change, wherein the evaluation unit is configured to check, on the basis of transmitted lane information and transmitted vehicle information, whether a lane change is occurring or not, wherein if a lane change is occurring, a situation-detection process is carried out on the basis of the vehicle information which comprises the vehicle velocity, acceleration, steering angle and/or yaw rate, to determine whether the current driving situation implies a driver's intention to change lane or not,
**characterized in that**
a further situation which implies the driver's intention is examined, wherein it is assumed that the lane change is intentional if it is determined that the output signal was suppressed or reduced at at least one preceding lane change, and the output signal is suppressed or at least reduced if the lane change takes place on the basis of the driver's intention.

## Revendications

1. Procédé d'assistance du conducteur, un signal de sortie étant généré lorsqu'une opération de changement de voie du véhicule est reconnue, le signal de sortie étant inhibé ou non généré ou réduit en fonction de la situation de conduite lors du changement de voie, le contrôle de la présence ou non d'un changement de voie étant effectué dans une étape (202) en s'appuyant sur une information de voie de circulation communiquée et une information de véhicule communiquée et, lorsqu'il y a présence d'un changement de voie, une reconnaissance de situation étant effectuée dans une étape (204), à l'aide de l'information de véhicule, laquelle comprend la vitesse de déplacement, l'accélération, l'angle de braquage et/ou le taux de lacet, en vue de déterminer si la situation de conduite actuelle implique ou non une intention de changement de voie de la part du conducteur,
**caractérisé en ce que**
une situation supplémentaire qui implique une intention du conducteur est analysée en partant du principe que le changement de voie est intentionnel lorsqu'il est déterminé que le signal de sortie était inhibé ou réduit lors d'au moins un changement de voie antérieur et **en ce que** le signal de sortie est inhibé ou au moins réduit lorsque le changement de voie a lieu en raison de l'intention du conducteur.

2. Procédé selon l'une des revendications précédentes, **caractérisé en ce que** le signal de sortie est inhibé ou réduit lorsque le changement de voie est effectué en sens inverse du changement de voie antérieur.

3. Procédé selon l'une des revendications précédentes, **caractérisé en ce que** la différence est faite entre un changement de voie envisagé et non envisagé au moyen d'un classificateur, et le signal de sortie est généré en fonction de ce résultat.

4. Procédé selon l'une des revendications précédentes, **caractérisé en ce qu'**une analyse de la situation de conduite est effectuée à l'aide d'informations du véhicule comme, par exemple, l'accélération, l'angle de braquage, et la présence d'une intention du conducteur lors d'un changement de voie est dérivée de la situation déterminée.

5. Procédé selon l'une des revendications précédentes, **caractérisé en ce qu'**une classification de l'intention de changement de voie a lieu lorsque la situation de conduite ne permet pas de conclure explicitement à une intention du conducteur.

6. Procédé selon l'une des revendications précédentes, **caractérisé en ce que** le signal de sortie est un signal d'alerte d'un avertisseur de sortie de voie.

7. Dispositif d'assistance du conducteur, comprenant au moins une unité d'interprétation destinée à générer un signal de sortie, l'unité d'interprétation étant configurée de telle sorte que lors d'un changement de voie, le signal de sortie est inhibé, non généré ou réduit en fonction de la situation de conduite lors du changement de voie, l'unité d'interprétation étant configurée pour contrôler la présence ou non d'un changement de voie en s'appuyant sur une information de voie de circulation communiquée et une information de véhicule communiquée et, lorsqu'il y a présence d'un changement de voie, une reconnaissance de situation étant effectuée, à l'aide de l'information de véhicule, laquelle comprend la vitesse de déplacement, l'accélération, l'angle de braquage et/ou le taux de lacet, en vue de déterminer si la situation de conduite actuelle implique ou non une intention de changement de voie de la part du conducteur,
**caractérisé en ce que**
une situation supplémentaire qui implique une intention du conducteur est analysée en partant du principe que le changement de voie est intentionnel lorsqu'il est déterminé que le signal de sortie était inhibé ou réduit lors d'au moins un changement de voie antérieur et le signal de sortie est inhibé ou au moins réduit lorsque le changement de voie a lieu en raison de l'intention du conducteur.
